Europäisches Patentamt

European Patent Office

Office européen des brevets

(11) Numéro de publication : **0 099 771 B1**

# (12) FASCICULE DE BREVET EUROPÉEN

(45) Date de publication du fascicule du brevet :
06.05.87

(51) Int. Cl.⁴ : **F 02 M 51/08, F 16 K 31/06**

(21) Numéro de dépôt : **83401196.7**

(22) Date de dépôt : **10.06.83**

(54) **Electrovanne à obturateur plastique.**

(30) Priorité : 21.07.82 FR 8212734

(43) Date de publication de la demande :
01.02.84 Bulletin 84/05

(45) Mention de la délivrance du brevet :
06.05.87 Bulletin 87/19

(84) Etats contractants désignés :
DE GB IT

(56) Documents cités :
EP-A- 0 006 770
DE-A- 2 049 242
DE-B- 1 072 428
DE-C- 975 662
DE-C- 1 288 857
FR-A- 1 394 725
FR-A- 2 302 471
GB-A- 594 649
US-A- 3 245 651

(73) Titulaire : **SOLEX**
**19, rue Lavoisier**
**F-92002 Nanterre Cédex (FR)**

(72) Inventeur : **Wallerand, Philippe**
**15, rue de Bruxelles**
**F-78500 Sartrouville (FR)**

(74) Mandataire : **Fort, Jacques et al**
**CABINET PLASSERAUD 84, rue d'Amsterdam**
**F-75009 Paris (FR)**

EP 0 099 771 B1

Jouve, 18, rue St-Denis, 75001 Paris, France

## Description

La présente invention concerne les électrovannes, c'est-à-dire les vannes à commande électromagnétique, du type conforme au préambule de la revendication 1.

L'invention trouve une application particulièrement importante, bien que non exclusive, dans le domaine de l'alimentation en combustible des moteurs à combustion interne.

On connaît des documents montrant des électrovannes du type ci-dessus défini, notamment GB-A-594 649. Dans le cas particulier de l'alimentation en combustible des moteurs, ces électrovannes sont généralement commandées par des impulsions de rapport cyclique variable en fonction d'un paramètre de fonctionnement du moteur, afin de fournir à celui-ci un mélange dont le débit et la composition sont optimaux. Dans la plupart des cas, l'équipage mobile de l'électrovanne est constitué par un noyau en fer doux dont l'appui sur un siège entourant l'ouverture de passage définit la première position de butée.

L'électrovanne du document GB-A-594 649 a un obturateur constitué par une tête de caoutchouc synthétique ou d'autres matériaux souples ou élastiques jouant un rôle d'étanchéité. Ceci conduit à des problèmes de déformation et d'accroissement de la durée de fermeture de la vanne.

Le document DE-A-1 288 857, décrit de son côté plusieurs modes de réalisation d'une vanne électromagnétique ayant ou bien un seul clapet ou bien deux clapets fonctionnant en sens opposé. Dans tous les cas, ce document enseigne de constituer chaque clapet sous forme d'un organe creux pour présenter une souplesse suffisante en dépit de la dureté du matériau constitutif.

Le document DE-C-975 662 décrit une électrovanne avec une partie arrière qui coopère avec une surface d'appui fixe prévue pour définir la position de pleine ouverture de l'électrovanne.

Le document DE-A-2 049 242 désigne une électrovanne avec un obturateur constitué par une pièce dont la partie arrière déborde radialement du noyau.

De façon générale, la plupart des électrovannes de l'art antérieur présentent divers inconvénients parmi les suivants :

Il est difficile de constituer, par assemblage du noyau et d'un élément obturateur métallique rapporté, un équipage mobile dont les cotes géométriques restent dans les tolérances requises. Ces tolérances sont serrées, car ce sont les cotes de l'équipage mobile qui déterminent la course de cet équipage et par conséquent les caractéristiques de l'électrovanne. Des retouches coûteuses sont donc fréquemment nécessaires.

La fin de course est matérialisée par un contact métal sur métal dans les deux positions de butée. Lorsque l'électrovanne est alimentée par des impulsions électriques périodiques, ces chocs répétés peuvent entraîner une usure rapide par matage des parties venant en contact. En particulier, le choc de l'élément obturateur contre le siège déforme ce dernier et modifie les caractéristiques de débit de l'électrovanne. Une solution partielle a été apportée à ce problème par la demande de brevet EP-A-0 006 770. Suivant ce brevet, la première position de butée est matérialisée par l'appui d'un élément d'équipage autre que l'obturateur sur le boîtier. On n'évite cependant pas le contact métal sur métal et la solution n'est par ailleurs pas acceptable pour les vannes « tout ou rien ».

Le noyau de fer doux vient en contact avec la partie fixe du circuit magnétique de la bobine lorsque l'équipage est dans la seconde position de butée. Il peut se produire un collage par magnétisme rémanent, ce qui allonge le délai de fermeture de l'électrovanne après coupure du courant de commande.

La présente invention vise à fournir une électrovanne du type ci-dessus défini répondant mieux que celles antérieurement connues aux exigences de la pratique, notamment en ce qu'elle écarte dans une large mesure les inconvénients ci-dessus.

Dans ce but, l'invention propose une électrovanne du type ci-dessus défini conforme à la partie caractérisante de la revendication 1.

Dans un mode d'exécution de l'invention particulièrement avantageux du fait de la précision qu'il permet d'atteindre sur les cotes, l'obturateur est directement surmoulé sur le noyau. Pour cela, on injecte le matériau plastique dans un moule à l'intérieur duquel a été préalablement disposé de façon précise le noyau. Dans une variante de réalisation, l'obturateur est réalisé à part dans un moule, puis encliqueté sur le noyau.

Le matériau plastique sera évidemment choisi pour tenir compte des conditions de fonctionnement et de la nature du fluide. En particulier, lorsque l'électrovanne est destinée à être utilisée dans un système d'alimentation en combustible, le matériau plastique doit être inattaquable par les produits pétroliers. On peut notamment utiliser le polytétrafluoroéthylène, divers polyamides, des résines polyacétal et le polysulfure de phénylène. Ces produits peuvent être utilisés à l'état pur ou peuvent être mélangés à des charges qui en améliorent les caractéristiques mécaniques, par exemple à du carbone.

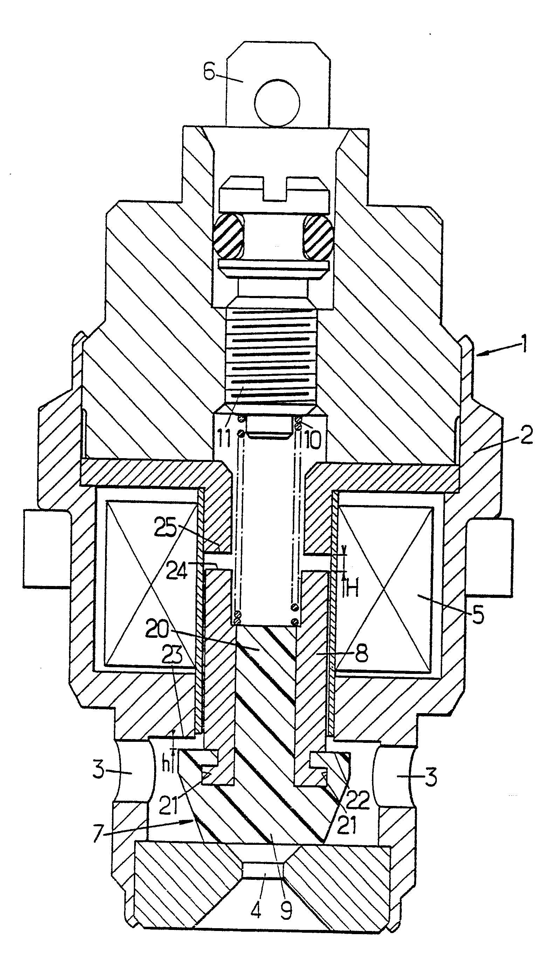

L'invention sera mieux comprise à la lecture de la description qui suit d'un mode d'exécution particulier, donné à titre d'exemple non limitatif. La description se réfère à la figure unique qui l'accompagne et qui montre, en coupe longitudinale, une électrovanne suivant l'invention, les différents éléments étant dans la position qu'ils occupent au repos, alors que la bobine n'est pas excitée.

L'électrovanne 1 représentée schématiquement sur la figure unique est destinée à être interposée sur un circuit d'amenée de combustible, dans un carburateur pour moteur à explosion. Cette électrovanne peut être regardée comme comportant un boîtier 2 en plusieurs pièces assemblées dans lequel se déplace un équipage mobile 7. Dans le boîtier est ménagée une chambre à combustible alimentée en combustible par des passages 3 et d'où le combustible peut s'échapper par une ouverture 4. Dans sa position de repos, montrée sur la figure, la face terminale de l'équipage s'applique contre un siège plat entourant l'ouverture 4 de façon à séparer celle-ci de la chambre à combustible d'alimentation. Le boîtier contient un bobinage électromagnétique fixe 5 qui peut être alimenté en courant électrique par l'intermédiaire d'une cosse 6. La bobine est associée à un circuit magnétique constitué de façon classique et qui se referme par un noyau en matériau ferro-magnétique 8 appartenant à l'équipage 7. Cet équipage est guidé par le boîtier et peut coulisser entre deux positions de butée. Un ressort de rappel 10, dont la force est réglable à l'aide d'une vis 11, tend à maintenir l'équipage dans une première position de butée (position de repos) ou il s'applique contre le siège. Le bobinage 5 est prévu pour exercer sur le noyau 8 une force de sens inverse de celle du ressort de rappel 10, pour amener l'équipage 7 dans une seconde position de butée, libérant l'ouverture 4, lorsque le bobinage est excité.

La disposition générale décrite jusqu'ici est relativement classique. Mais, dans le mode d'exécution de l'invention représenté, l'équipage mobile 7 comporte, en plus du noyau en fer doux 8, un obturateur 9 solidarisé du noyau de façon positive (et non pas par simple friction). Une solution avantageuse pour solidariser de façon définitive le noyau et l'obturateur en respectant des cotes précises consiste à surmouler l'obturateur sur le noyau. Pour cela, on place le noyau 8 dans un moule en le retenant de façon précise par rapport aux parois du moule, puis on injecte dans le moule une matière plastique qui pénètre d'une part dans la partie interne 20 du noyau pour constituer une âme, d'autre part dans une gorge périphérique 21 ménagée autour du noyau. La partie avant de l'obturateur doit avoir une épaisseur et un diamètre suffisants pour réduire les chocs appliqués sur le siège à chaque fermeture de la vanne. De plus, dans le mode de réalisation décrit, l'obturateur 9 a une forme telle que, dans la seconde position de butée, c'est une zone annulaire 22 de la face arrière de l'obturateur 9 qui est en contact avec une face radiale 23 du circuit magnétique appartenant au boîtier. Pour cela, il suffit que la course h de l'équipage mobile entre les deux positions de butée de l'obturateur 9 soit légèrement inférieure à la distance H qui existe entre la face terminale arrière 24 du noyau et la face en regard 25 du circuit magnétique au repos.

La disposition qui vient d'être décrite apporte de nombreux avantages. Les dimensions de l'équipage mobile qui fixe la course sont définies avec une grande précision. Le boîtier peut lui-même être constitué sans difficultés de façon que la course h soit bien déterminée. Du fait que les butées interviennent sur des contacts plastique-métal, l'usure est réduite, la matière plastique utilisée présentant une certaine élasticité. Grâce à la suppression du contact entre les faces terminales 24, 25, du noyau et du circuit magnétique fixe, les effets de collage dus à la rémanence magnétique sont très diminués. Il suffit pour cela que l'entre-fer H-h qui subsiste lorsque l'équipage mobile est dans la seconde position de butée soit de quelques dixièmes de millimètre. La diminution du temps de réponse permet d'adopter des fréquences élevées de travail, atteignant 200 Hertz environ pour des électrovannes miniatures du genre monté sur les carburateurs.

**Revendications**

1. Electrovanne comprenant un boîtier (2) muni d'une ouverture de passage de fluide (4) et contenant un équipage mobile comportant un noyau en matériau ferro-magnétique (8) et un obturateur solidarisé de façon positive du noyau et recouvrant la partie terminale du noyau, l'équipage étant déplaçable en translation entre une position de pleine ouverture et une position de fermeture définie par appui de la face avant de l'obturateur sur un siège entourant l'ouverture de passage, le ressort de rappel étant prévu pour repousser l'obturateur vers l'une de ses positions de butée et une bobine électromagnétique étant prévue pour amener l'équipage dans l'autre position de butée contre l'action du ressort lorsque ladite bobine est excitée, la partie terminale de l'obturateur comportant un rebord approximativement radial en saillie dans une gorge du noyau, caractérisée en ce que l'obturateur (9) est constitué par une pièce de matière plastique moulé dont la partie arrière déborde radialement du noyau (8) et coopère par sa face arrière (22) approximativement plate et radiale avec une surface d'appui (23) prévue sur le boîtier pour définir la position de pleine ouverture de l'électrovanne.

2. Electrovanne suivant l'une quelconque des revendications précédentes, caractérisée en ce que la matière plastique est le PTFE, le polysulfure de phénylène, le polyamide ou une résine polyacétal, éventuellement mélangée à des charges.

3. Procédé de fabrication d'une électrovanne suivant l'une quelconque des revendications précédentes, caractérisé en ce qu'on surmoule l'obturateur sur le noyau.

4. Procédé de fabrication selon la revendication 3, caractérisé en ce qu'on injecte la matière plastique dans un moule à l'intérieur duquel a été préalablement disposé le noyau.

5. Procédé de fabrication d'une électrovanne, selon l'une quelconque des revendications 1 et 2, caractérisé en ce que l'obturateur est réalisé à part dans un moule, puis encliqueté sur le noyau.

**Claims**

1. Electrically actuated valve comprising a body (2), formed with a fluid flow opening (4) and containing a movable unit having a ferro-magnetic matter core (8) and a closure member positively connected to the core and covering the end part of the core, the unit being rectilinearly movable between a full opening position and a closing position which is defined by abutment of the front surface of the closure member on a seat surrounding the flow opening, a return spring being provided for biasing the closure member toward one of its abutment positions and an electromagnetic coil being provided for bringing the unit into the other abutment position against the action of the spring when said coil is energized, the end portion of the closure member having a substantially radial flange projecting into a groove of the core, characterized in that the closure member (9) consists of a part of molded plastics whose rear portion extends radially from the core (8) and has an approximately flat and radial rear surface (22) which cooperates with an abutment surface (23) formed on the body for defining the full opening position of the electrically actuated valve.

2. Electrically actuated valve according to any preceding claim, characterized in that the plastics is PTFE, phenylene polysulfide, polyamide or a polyacetal resin, possibly mixed with reinforcement material.

3. Process for manufacturing an electrically actuated valve according to any one of the preceding claims, characterized in that the opening member is directly molded on the core.

4. Manufacturing process according to claim 3, characterized in that plastic material is injected into a mold within which the core was previously located.

5. Process for manufacturing an electrically actuated valve according to any one of claims 1 and 2, characterized in that the closure member is separately manufactured in a mold, then snapped onto the core.

**Patentansprüche**

1. Magnetventil, enthaltend ein Gehäuse mit einer Fluiddurchtrittsöffnung (4) und einem beweglichen Organ, das aus einem Kern (8) aus ferromagnetischem Material und einem Verschlußglied besteht, das mit dem Kern formschlüssig verbunden ist und den Endteil des Kerns bedeckt, wobei das Organ translatorisch verschiebbar ist zwischen einer voll geöffneten Stellung und einer Schließstellung, die durch die Anlage der vorderen Stirnfäche des Verschlußgliedes auf einem die Durchtrittsöffnung umgebenden Sitz definiert ist, wobei eine Rückstellfeder vorgesehen ist, um das Verschlußglied in die eine ihrer Anlagestellungen zu drücken, und ein Magnetspule vorgesehen ist, um das Glied gegen die Wirkung der Feder in die andere Anlagestellung zu drücken, wenn die Spule erregt ist, wobei der Endteil des Verschlußgliedes einen Rand aufweist, der ungefähr radial in eine Ringnut der Kerns überragt, dadurch gekennzeichnet, daß das Verschlußglied (9) durch ein gegossenes Kunststoffteil gebildet ist, dessen Hinterteil vom Kern (8) radial absteht und mit seiner Rückseite (22) ungefähr flach und radial mit einer Anlagefläche (23) am Gehäuse zusammenarbeitet, um die voll geöffnete Stellung des Magnetventils zu definieren.

2. Magnetventil nach einem der vorhergehenden Ansprüche, dadurch gekennzeichnet, daß der Kunststoff Polytetrafluorethylen, Polyphenylensulfid, Polyamid oder Polyacetalharz ist, dem gegebenenfalls Füllstoffe beigemischt sind.

3. Verfahren zur Herstellung eines Magnetventils nach einem der vorhergehenden Ansprüche, dadurch gekennzeichnet, daß man das Verschlußglied auf den Kern aufformt.

4. Verfahren zur Herstellung nach Anspruch 3, dadurch gekennzeichnet, daß man den Kunststoff in eine Form spritzt, in der vorher der Kern angeordnet wurde.

5. Verfahren zur Herstellung eines Magnetventils nach einem der Ansprüche 1 und 2, dadurch gekennzeichnet, daß das Verschlußglied in einer Form gesondert hergestellt und dann auf dem Kern eingerastet wird.